# EUROPÄISCHE PATENTSCHRIFT

(11) **EP 1 712 598 B1**
(45) Veröffentlichungstag und Bekanntmachung des Hinweises auf die Patenterteilung: **12.10.2011**
(21) Anmeldenummer: 06006486.2
(22) Anmeldetag: 29.03.2006
(51) Int. Cl.: C09C 1/42

(54) **Verfahren zur Veränderung der Strukturladung von mineralischen Silikatverbindungen**
Method for modifying the structural charge of mineral siliceous compounds
Procédé pour modifier la charge structurelle de composés de silicate minérales

(30) Priorität: 15.04.2005 DE 102005017412
(43) Veröffentlichungstag der Anmeldung: 18.10.2006
(73) Patentinhaber: Karlsruher Institut für Technologie, 76131 Karlsruhe (DE)
(72) Erfinder: Zemanová, Matilda, Dr., 95171 Velcice (SK); Nüesch, Rolf, Prof. Dr., 76229 Karlsruhe (DE); Link, Guido, Dr., 75045 Walzbachtal (DE); Janek, Mariàn, Dr., 85101 Bratislava (SK)

(56) Entgegenhaltungen:
- DE-A1- 2 701 056
- US-A- 4 053 324

## Beschreibung

Die Erfindung betrifft ein Verfahren zur Veränderung, insbesondere zur Verringerung der Strukturladung von mineralischen Silikatverbindungen.

Mineralische Rohstoffe, die von ihrem Strukturaufbau her die Möglichkeit einer Ladungsmodifizierung bieten, gehören gemäß G. Lagaly und K. Beneke, Colloid Polym. Sci., Band 269, S. 1198-1211, 1991, zu den natürlichen anorganischen Kationenaustauschern. Ein Beispiel für diese industriell weit verbreiteten Mineralien sind Tonmineralien aus der Gruppe der dioktaedrischen Smektite oder der Zeolithe.

Der Rohstoff Bentonit enthält als Hauptbestandteil das Mineral Montmorillonit, das ein dioktaedrisches Smektit ist. Bentonit wird in großen Mengen für die Formenherstellung in der Gießindustrie, als Streu für Haustiere, als Bohrschlamm und als Pelletierungsmittel für Eisenerz eingesetzt. In kleineren Mengen findet Bentonit Verwendung bei der Herstellung von kosmetischen Produkten wie Lidschatten, Lippenstiften oder Mascaras, in Haarwaschmitteln, Haartönungen oder in Zahnpasten. Weiter wird Bentonit zu Reinigungsmitteln wie Waschpulver und Waschpasten zugegeben. Darüber hinaus wird Bentonit eingesetzt in der Papierindustrie bei der Herstellung kohlefreier Durchschreibpapiere und spezieller Druckpapiere sowie in der Farb- und Lackindustrie als Füllstoff oder rheologisches Additiv. Schließlich findet sich Bentonit in pharmazeutischen Anwendungen wie z.B. in Moorbäderformulierungen, Körperschlämmen für Hautbehandlungen oder für innere Anwendungen bei Verdauungsproblemen oder als Zusatz in Pillen zur kontrollierten Wirkstoffabgabe.

Das Kationenaustauschvermögen von Montmorillonit hängt mit dessen chemischer Struktur zusammen. Die strukturellen Kationen dieses Minerals können ersetzt werden durch Kationen mit niedrigerer Oxidationszahl sowohl im tetraedrischen Netzwerk (Si⁴⁺ wird ersetzt durch Al³⁺) als auch im oktaedrischen Netzwerk (Al³⁺ wird ersetzt durch Mg²⁺). Dadurch bildet sich an den Elementarschichten eine negative Ladung, die durch austauschbare Kationen ausgeglichen wird. Eine Elementarschicht des Minerals besteht aus zwei tetraedrischen Netzwerken (T) und einem oktaedrischen Netzwerk (O), die durch gemeinsame Sauerstoffatome zusammenkoppeln und in der Reihenfolge TOT angeordnet sind.

Eine wichtige Voraussetzung für eine effektive Strukturmodifizierung des Minerals ist die Anwesenheit von vakanten Plätzen in der Struktur. Die Modifizierung erfolgt so, dass diese vakanten Plätze durch kleine Kationen belegt werden und auf diese Weise eine Ladungsmodifizierung des Minerals bewirken. Derartige Plätze sind in dioktaedrischen Smektiten, die Platz für kleine austauschbare Kationen in den Schichten bieten, oder in Zeolithen, die austauschbare Kationen in den Strukturhöhlen besitzen, vorhanden.

Das Verfahren zur Ladungsmodifizierung an dioktaedrischen Smektiten ist aus U. Hofmann, und R. Klemen, Z. Anorg. Allg. Chem., Band 262, S. 95-99, 1950, als *Hofmann-Klemen-Effekt* bekannt. Gemäß der US 4,053,324 sind hierfür kleine austauschbare Kationen, insbesondere Lithiumkationen geeignet, die bei konventioneller Erhitzung des Minerals auf Temperaturen zwischen 105° und 300 °C durch Diffusion in die vakanten Plätze der Struktur wandern. Der Zeitbedarf für die Ladungsmodifizierung ist von der Temperatur und vom gewünschten Grad der Modifizierung abhängig und beträgt zwischen 30 Minuten bis 24 Stunden.

Die DE 197 52 728 C2 offenbart die Erwärmung von Schüttgütern und Pulvern in einem mit Mikrowellen beheizten Drehrohrofen.

Hieraus ist allerdings nicht ersichtlich, wie sich die Eigenschaften von Materialien gezielt beeinflussen lassen.

DE2701056 offenbart den Austausch von Lithiumionen in Montmorillonitton. Hierzu wird der Ton mit einem Lithiumsalz vermischt und auf eine Temperatur zwischen 125 und 300°C erhitzt.

Davon ausgehend ist es die Aufgabe der Erfindung, ein Verfahren zur Veränderung, insbesondere zur Verringerung der Strukturladung von mineralischen Silikatverbindungen anzugeben, das die genannten Nachteile und Einschränkungen nicht aufweist. Insbesondere soll ein Verfahren mit geringen Verfahrenszeiten und Verfahrenstemperaturen bereitgestellt werden.

Diese Aufgabe wird durch ein Verfahren mit den kennzeichnenden Merkmalen des Anspruchs 1 gelöst. Die Unteransprüche beschreiben vorteilhafte Ausgestaltungen der Erfindung.

Die vorliegende Erfindung stellt ein Verfahren zur Veränderung, insbesondere zur Verringerung oder Absenkung der Strukturladung von mineralischen Silikatverbindungen, vorzugsweise von natürlichen mineralischen Rohstoffen wie z.B. quellfähigen Tonminerale der Smektit-Familie, insbesondere dioktaedrischen Silikatverbindungen, oder Zeolithen bereit.

Aus diesen Silikatverbindungen und einem oder mehreren Lithiumsalzen wie z.B. LiCl, LiNO₃, LiHCO₃, Li₂CO₃, LiOH oder Li₂SO₄ wird eine Mischung hergestellt, die vorzugsweise in Form eines Pulvers vorliegt, die aber auch als Dispersion vorliegen kann. Im letzteren Falle muss jedoch vor den weiteren Verfahrensschritten der Feststoff angetrennt werden.

Diese Mischung wird homogenisiert und trocken, d.h. in Form eines Pulvers, mittels einer Beaufschlagung durch Mikrowelle über einen Zeitraum, der bevorzugt zwischen 5 Minuten und 30 Minuten, besonders bevorzugt zwischen 5 Minuten und 10 Minuten auf eine Temperatur, die vorzugsweise zwischen 100° C und 300 °C, besonders bevorzugt zwischen 190 °C und 230 °C liegt, erwärmt. Längere Zeiten sind gleichwohl möglich, verschlechtern jedoch die Energiebilanz. Versuche haben überraschend gezeigt, dass bereits eine fünfminütige Beaufschlagung dieser Mischung mit Mikrowelle zu demselben Ergebnis führt wie eine stundenlange konventionelle Erwärmung.

In einer besonderen Ausgestaltung ist die Mischung auf ein Substrat aufgebracht, z. B. als reaktive Schicht auf der Oberfläche eines durchschreibfreien Papiers. Dieses Substrat wird kontinuierlich durch einen Bereich geschoben, innerhalb dessen die reaktive Schicht aus der Mischung mit Mikrowelle beaufschlagt wird. Eine derartige Ausgestaltung wird erst durch das vorliegende Verfahren möglich, da dieses bereits nach einem sehr kurzen Zeitraum, besonders bevorzugt zwischen 5 und 10 Minuten, eine Veränderung der Strukturladung bewirkt.

Die vorliegende Erfindung basiert auf der bekannten Tatsache, dass die Migration von kleinen Kationen in einem Festkörper durch ihr Diffusionsvermögen im Festkörper bestimmt ist, das üblicherweise mit höherer Temperatur zunimmt. Konventionelle Heizmethoden, die auf Strahlung und Konvektion basieren, sind dadurch charakterisiert, dass sie nur die Oberfläche einer Pulverschüttung erwärmen, während in das Volumen der Pulverschüttung die Wärme über Wärmeleitung gelangt. Als Konsequenz aus der Tatsache, dass sich Pulverschüttungen durch eine sehr geringe Wärmeleitfähigkeit auszeichnen, bedürfen konventionelle Verfahren einer zeitintensiven Prozessführung.

Der Einsatz der Mikrowellentechnik erlaubt eine direkte Erwärmung einer Pulverschüttung im Volumen, dadurch dass die Mikrowellenstrahlung das Material durchdringt und im Material durch verschiedene Absorptionsmechanismen in Wärme umgewandelt wird. Die Absorptionsmechanismen sind abhängig von dem zu erwärmenden Material, von dessen elektronischer bzw. ionischer Leitfähigkeit, von Dipolrelaxationen oder Anregungen von Gitterschwingungen durch Mehr-Phononen-Streuprozesse.

Neben diesem verfahrenstechnischen Vorteil der volumetrischen Erwärmung ist es zudem durch selektive Absorption der Mikrowellen möglich, die Mikrowellenenergie so einzusetzen, dass damit bestimmte Prozesse beschleunigt werden. Im Fall der Ladungsmodifizierung der Schichtsilikatstruktur wird auf diese Weise die Mikrowellenabsorption über die ionische Leitfähigkeit ausgenutzt, indem entsprechende Salze zugegeben werden, um die Ionen in vorhandene Lücken in der Gitterstruktur einzulagern. Durch diese selektive Absorption wird eine deutliche Beschleunigung der Ladungsmodifizierung erzielt.

Je nach Absorptionseigenschaften bzw. der Menge des zu behandelnden Materials ist eine geeignete Mikrowellenfrequenz zu wählen. Mit zunehmenden dielektrischen Verlusten, d.h. mit abnehmender Eindringtiefe der Mikrowellen bzw. mit größer werdenden Volumina ist eine größere Wellenlänge, d.h. eine niedrigere Mikrowellenfrequenz günstiger für das Verfahren. Die Mikrowellenfrequenz liegt bevorzugt in einem Frequenzband, das für industrielle Anwendungen freigegeben ist *(ISM Frequenz*)*.*

Die Lithiumionen, die dem Material zugefügt wurden, werden durch das Mikrowellenfeld selektiv angeregt und wandern dadurch beschleunigt aus der Festkörperoberfläche an die vakanten Plätze, die in der Struktur des Materials vorhanden sind.

Die direkte und selektive Volumenheizung liefert insbesondere verfahrenstechnische Vorteile, die zu einem erheblichen Zeitgewinn gegenüber konventionellen Methoden führen. Die Verringerung von Prozesszeiten und Prozesstemperaturen können ausgenutzt werden, um die Materialeigenschaften zu verbessern.

Weiterhin ist eine Öffnung des Einsatzgebiets für Mikrowellen behandelte mineralische Rohstoffe im Bereich der Vorbehandlung von Schichtsilikaten und Zeolithen bei gleichzeitiger Kostenminimierung durch Wegfall von aufwendigen Kationen-Austausch-Prozessen möglich.

Die Erfindung wird im Folgenden anhand von zwei Ausführungsbeispielen näher erläutert. Die Abbildungen zeigen
- **Fig. 1**: Kationenaustauschkapazität von Volclay als Funktion der Behandlungsart und des Lithiumgehalts.
- **Fig. 2**: Kationenaustauschkapazität von Calcigel als Funktion der Behandlungsart und des Lithiumgehalts.
- **Fig. 3**: Kationenaustauschkapazität von Volclay, das mittels konventioneller Erwärmung behandelt wurde, als Funktion der Behandlungsdauer.
- **Fig. 4**: Kationenaustauschkapazität von Volclay, das mit Mikrowelle behandelt wurde, als Funktion der Behandlungsdauer.
- **Fig. 5**: Kationenaustauschkapazität von Volclay, das mittels konventioneller Erwärmung behandelt wurde, als Funktion der Temperatur.
- **Fig. 6**: Kationenaustauschkapazität von Volclay, das mit Mikrowelle behandelt wurde, als Funktion der Temperatur.
- **Fig. 7**: Kationenaustauschkapazität der Volclay Probe als Funktion der Behandlungsdauer.
- **Fig. 8**: Infrarotspektren von Volclay mit unterschiedlicher Lithiumionenkonzentration, das mittels konventioneller Erwärmung behandelt wurde.
- **Fig. 9**: Infrarotspektren von Volclay mit unterschiedlicher Lithiumionenkonzentration, das mit Mikrowelle behandelt wurde.

Für die Behandlung wurden zwei Bentonite mit der Bezeichnung Volclay bzw. Calcigel eingesetzt. Zunächst wurde jeweils eine Fraktionierung des Probenmaterials gemäß M. S. Stul und L. van Leemput, Clay Miner., Band 17, S. 209-215, 1982 durchgeführt.

Hieran anschließend erfolgte eine Modifizierung des Materials gemäß H. Tributh und G. Lagaly, GIT-Fachzeitschrift für das Laboratorium, Band 30, S. 524-529 und S. 771-776, 1986, zur Anreicherung des Hauptbestandteils Montmorillonit.

Die dargestellte Dispersion mit einem Gehalt an 1M NaCl wurde dann mit jeweils 1M Lösungen mit einer Lithiumkonzentration von 20%, 40%, 60%, 80% und 100% behandelt. Die überflüssige Salzmenge wurde mit destilliertem Wasser ausgewaschen. Auf diese Weise wurde eine Serie von Proben bereitgestellt, die im Zwischenschichtraum die betreffende Zusammensetzung an Kationen aufwies.

Die Proben wurden anschließend entweder in einem Mikrowellenfeld oder zum Vergleich konventionell auf dieselbe Temperatur über die gleiche Zeit erhitzt. Die Effizienz der Neutralisierung der Schichtladung wurde durch die Bestimmung der Kationenaustauschkapazität nach L.P. Maier und G. Kahr, Clay Miner., Band 47, S. 386-388, 1999, nachgewiesen. Die Strukturänderungen wurden mittels Infrarotspektroskopie, die Quellfähigkeit mittels Röntgendiffraktion und die rheologischen Eigenschaften der wässrigen Dispersionen mittels rheologischen Messungen überprüft.

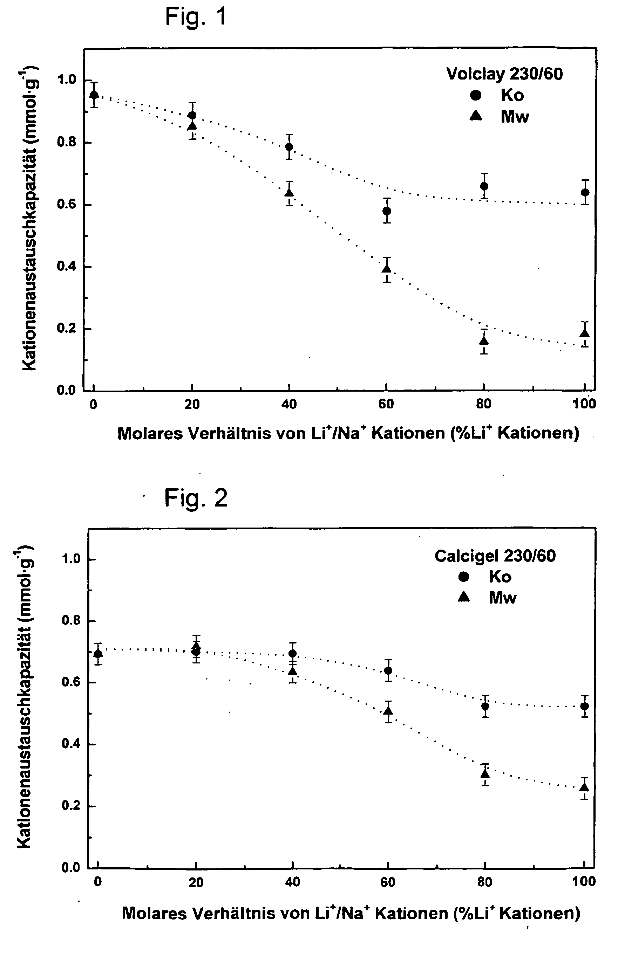

In **Fig. 1** und **2** sind die Kationenaustauchkapazitäten der Proben Volclay **(****Fig. 1****)** und Calcigel **(****Fig. 2****)** als Funktion des Lithiumgehaltes nach konventioneller (*Ko*) Behandlung bzw. nach einer Behandlung mit Mikrowellen (*Mw*) bei einer Temperatur von 230°C über eine Haltezeit von 60 Minuten dargestellt. Mit zunehmendem Lithiumgehalt der Probe nimmt die Effizienz der Mikrowellenbehandlung deutlich zu. Diese Zunahme ist auf die erhöhte Wahrscheinlichkeit für ein Lithiumkation, auf einen vakanten Platz in der Silikatstruktur zu treffen, zurückzuführen. Diese Wahrscheinlichkeit ist erhöht aufgrund der selektiven Absorption der Mikrowelle durch die Lithiumkationen und ihrem hieraus resultierenden höheren Diffusionsvermögen. Die Calcigel-Probe **(****Fig. 2****)** zeichnet sich gegenüber der Volclay-Probe **(****Fig. 1****)** durch eine geringere Kationenaustauschkapazität aus.

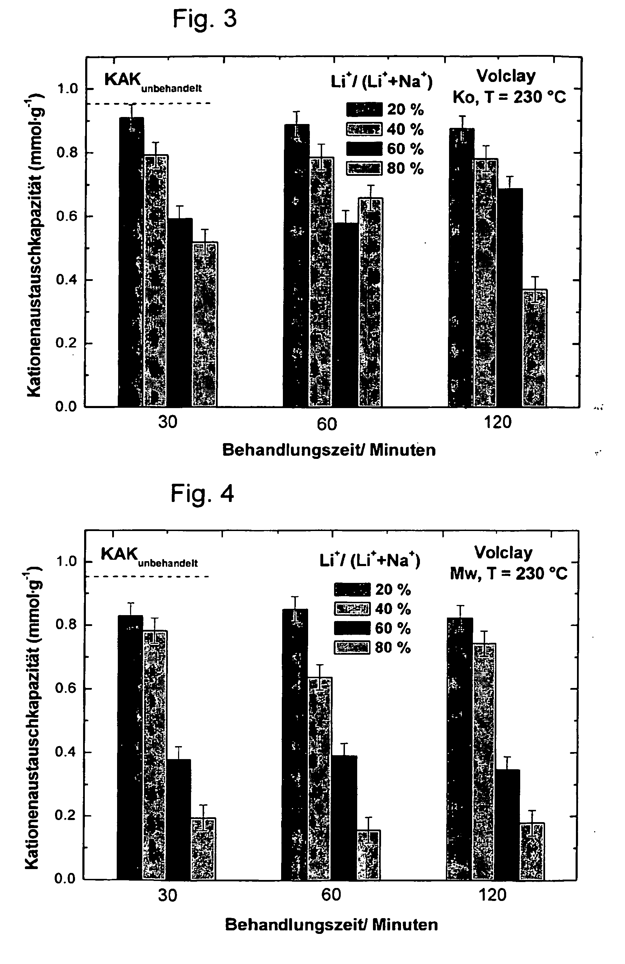

Die Abhängigkeit der Kationenaustauschkapazität von der Behandlungszeit bei einer konstanten Behandlungstemperatur von 230 °C wurde für die Volclay-Probe für konventionelle Behandlung **(****Fig. 3****)** und Mikrowellenbehandlung **(****Fig. 4****)** verglichen. Bei Mikrowellenbehandlung ist eine deutlich erhöhte Ladungsmodifizierung zu erkennen. Bereits nach einer Behandlungszeit von 30 Minuten ist im Mikrowellenfeld die Ladungsreduktion für die Volclay-Probe nahezu abgeschlossen. Danach ändert sich die Kationenaustauschkapazität im Mikrowellenfeld nicht mehr signifikant **(****Fig. 4****).** Demgegenüber reicht bei konventioneller Erwärmung **(****Fig. 3****)** selbst eine Behandlungszeit von 120 Minuten nicht aus, um die Werte der Kationenaustauschkapazität einer 30 Minuten lang mit Mikrowelle behandelten Probe zu erreichen.

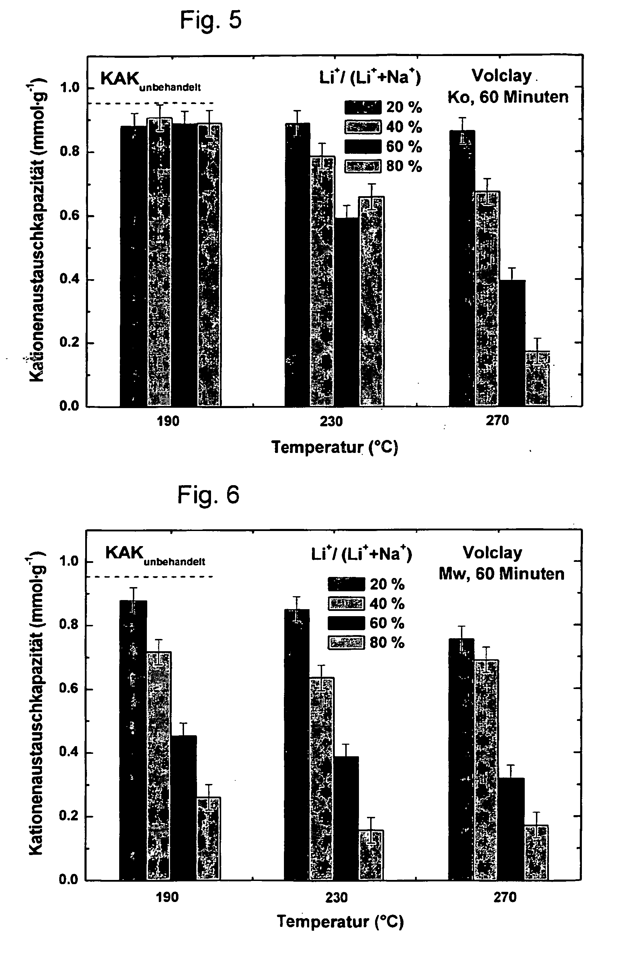

Die Effizienz der Ladungsmodifizierung bei konstanter Behandlungszeit und bei verschiedenen Temperaturen wird für die Volclay-Probe in den **Fig. 5** und **6** verglichen. Bei konventionellem Erhitzen der Proben bei 190 °C über 60 Minuten ist gemäß **Fig. 5** keine deutliche Abnahme an der Kationenaustauschkapazität erkennbar. Im Gegensatz hierzu zeigt eine Behandlung im Mikrowellenfeld bei 190 °C über 60 Minuten gemäß **Fig. 6** eine systematische Abnahme der Kationenaustauschkapazität bei zunehmendem Lithiumgehalt. Diese Abnahme ändert sich bei weiterer Temperaturerhöhung während der Mikrowellenbehandlung nur wenig. Um dieselbe Effizienz einer Erhitzung der Proben im Mikrowellenfeld während 60 Minuten bei 190 °C zu erzielen, erfordert die konventionelle Erhitzung eine Temperatur von 270 °C.

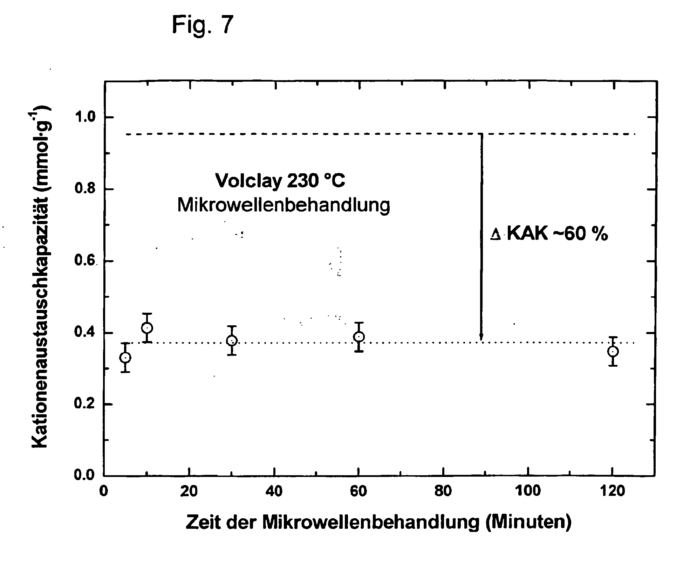

Da bei der Behandlung der Proben der Zeitaufwand ein wichtiger Kostenfaktor ist, wurde die Behandlungszeit mittels Mikrowellen bis auf 5 Minuten abgekürzt. Diese Zeitfenster ist mittels konventioneller Volumenerhitzung des Materials praktisch nicht erreichbar, da bei Laborbedingungen alleine die Aufheizphase für 190°C ca. 10 Min., auf 230°C ca. 15 Min. und für 270°C ca. 25 Min. beträgt. Im Gegensatz hierzu beträgt bei einer Mikrowellenbehandlung die Aufheizphase auf 230°C weniger als 5 Min. In **Fig. 7** ist die Kationenaustauschkapazität der Volclay-Probe, die mit 60 % Lithiumkationen belegt, nach konventioneller Behandlung und nach der Behandlung im Mikrowellenfeld als Funktion der Behandlungszeit dargestellt. Die Modifizierung durch Mikrowellenbehandlung erreicht praktisch bereits nach einer Behandlungszeit von 5-10 Minuten die maximal erreichbare Änderung der Kationenaustauschkapazität.

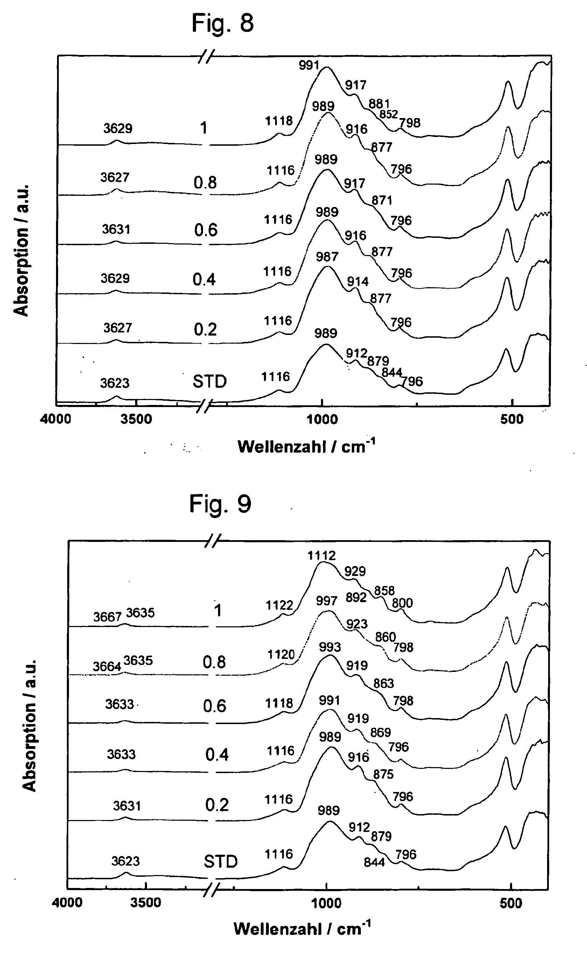

Der Einfluss der Migration der Lithiumkationen in die vakanten Plätze in der Struktur wurde weiter mit Infrarotspektroskopie untersucht. Die Lithiumkationen, die nach der Behandlung in die Struktur eindringen, beeinflussen die Schwingungsfrequenz der strukturellen OH-Gruppen. Die Verschiebung der Deformationsfrequenzen zu höheren Wellenzahlen dient als Nachweis für die Anwesenheit des Lithiums in den vakanten Strukturplätzen. **Fig. 8** und **9** vergleichen die aufgenommenen Infrarotspektren der Volclay-Probe, die konventionell bzw. im Mikrowellenfeld auf 230°C und über eine Dauer von 60 Minuten erhitzt wurde.

Die Bereiche der Schwingungsfrequenzen entsprechen bei ca. 3630 cm⁻¹ der Streckschwingung und zwischen 950-850 cm⁻¹ der Biegeschwingung der strukturellen OH-Gruppen. Für die Streckschwingungen von Proben, die im Mikrowellenfeld behandelt wurden, wird eine systematische Verschiebung der Schwingungsfrequenzen zu höheren Wellenzahlen (3623-3635 cm⁻¹) beobachtet. Darüber hinaus bildet sich bei Proben mit einem Lithiumgehalt von 60-100 % ein zusätzliches Absorptionsband bei ~3666 cm⁻¹ aus, das der trioktaedrischen Anordnung der strukturellen OH-Gruppen (AlMgLiOH) zuzuschreiben ist. Im Bereich der Biegeschwingungen sind deutliche Änderungen an den Schwingungsfrequenzen zu beobachten. Z. B. verschiebt sich die Absorptionsbande von AlAlOH unter Mikrowellenbestrahlung systematisch von 912 bis 929 cm⁻¹.

Mit der zunehmenden Effizienz der Ladungsmodifizierung und mit erhöhtem Lithiumgehalt verhalten sich die Absorptionsbänder von AlFeOH (879 cm⁻¹) und AlMgOH (844 cm⁻¹) etwas komplizierter. Bei einem Lithiumgehalt von 20-60 % ist nur eine Absorptionsbande beobachtbar. Beim höchsten verwendeten Lithiumgehalt entstehen zwei neue Bänder bei 892 und 858 cm⁻¹. Bei 1122 cm⁻¹ entwickelt sich ebenfalls signifikant ein neues Band, das in der Literatur auch als *Pyrofylite-like* bekannt ist. Die Si-O Streckschwingung bei 989 cm⁻¹ verschiebt sich zu 1112 cm⁻¹ und eine Andeutung einer Auftrennung des Bandes in zwei Komponenten ist deutlich erkennbar **(****Fig. 9****).**

Für die konventionell erhitzten Proben sind keine signifikanten Änderungen im Bereich der Streckschwingung beobachtbar. Kleine Änderungen ergaben sich für die Absorptionsbänder von AlFeOH (879 cm⁻¹) und AlMgOH (844 cm⁻¹), wobei ähnlich wie bei den Mikrowellen behandelten Proben zwei Absorptionsschultern bei 881 und 858 cm⁻¹ **(****Fig. 9****)** entstehen.

Im Folgenden werden an vier Anwendungsbeispielen exemplarisch die Vorteile des erfindungsgemäßen Verfahrens dargelegt.

### Beispiel 1

Für die Verwendung von Tonmineralien in durchschreibfreien Papieren wird eine reaktive Schicht an der Papieroberfläche benötigt, die beim angelegten Druck eine Verfärbung des Papiers verursacht. Für diese reaktive Schicht eignet sich ladungsmodifiziertes Montmorillonit. Erfindungsgemäß wird zu einem Bentonit im natürlichen Zustand (Feuchtigkeit 5-20 %) ein Lithiumsalz oder eine Lithiumsalzlösung in die Homogenisiermaschine in einer Menge von 20 bis 80 % der Kationenaustauschkapazität zugegeben. Wird z.B. ein Bentonit mit einer Kationenaustauschkapazität von 100 meq/100 g modifiziert, so ist für etwa 20%-ige Ladungsneutralisierung 0,85 g Lithiumchlorid auf 100 g Bentonit oder für etwa 80 %ige Ladungsneutralisierung 3,39 g Lithiumchlorid auf 100 g Bentonit erforderlich.

Ist gleichzeitig eine Säureaktivierung erwünscht, wird zu der Lithiumchloridlösung eine geringe Menge an einer Aktivierungssäure wie z.B. H₂SO₄ oder an Aktivierungskationen in der Form AlCl₃ zugegeben. Die Säure-(Kationen)konzentration kann 10-100 meq/Liter der Lösung betragen. Nach der Mikrowellenbehandlung werden bei Bedarf entstehende Chloride (NaCl, CaCl₂) ausgewaschen. Die Säureaktivierung wird alternativ mit einer oben genanten Lösung in einem zweiten Mikrowellenbehandlungsschritt durchgeführt. Nach den Behandlungen lässt sich das Probenmaterial mahlen.

Alternativ bietet sich die in-situ Modifizierung des Materials an, das in dünnen Schichten auf Papier oder Polymerfolien aufgetragenen wird. Hierzu wird eine dickflüssige Paste mit demselben Lithiumsalzgehalt wie oben und einem Wassergehalt von 20-40% auf das Trägermaterial aufgebracht. Eine Mikrowellenbehandlung des Materials erlaubt gleichzeitig zur Ladungsmodifizierung die Trocknung der mineralischen Schicht.

### Beispiel 2

Bei der Formenherstellung in der Gießindustrie kann die Modifizierung der Schichtladung am Montmorillonit eine erwünschte rheologische Eigenschaft einer Sand-Bentonitmischung wie z. B. eine erwünschte Festigkeit der Formen bewirken. Wie in Beispiel 1 wird auch hier eine Modifizierung mittels Mikrowellenbehandlung dadurch erreicht, dass zur Sand-Bentonitmischung ein Lithiumsalz oder eine Lithiumsalzlösung während des Homogenisierungsprozesses zugegeben wird. Auf diese Weise wird die gewünschte Ladungsneutralisierung von 20 bis 80 % der Kationenaustauschkapazität wie in Beispiel 1 erreicht.

### Beispiel 3

Bei kosmetischen Formulierungen verursachen bestimmte Mengen von ladungsmodifiziertem Bentonit erwünschte, rheologische Änderungen. Die Modifizierung mittels Mikrowellenbehandlung wird wie in Beispiel 1 und 2 beschrieben durchgeführt, um eine Ladungsneutralisierung von 20 bis 80 % zu erreichen.

### Beispiel 4

Das erfindungsgemäße Verfahren wird eingesetzt zur Herstellung von Lithium-Präparaten zur Therapie von depressiven Zuständen auf Bentonit-Basis mit kontrollierter Wirkstoffabgabe. Ein ladungsmodifizierter Bentonit, dessen Behandlung oben beschrieben wurde, eignet sich als Antidepressivum. Der ladungsmodifizierte Bentonit wird durch Magensäure teilweise aufgelöst, wodurch eine bestimmte Menge an Lithiumkationen freigesetzt und vom Körper aufgenommen wird. Die eingesetzten Mikrowellen vernichten gleichzeitig die ggf. im Bentonit enthaltenen Keime.

## Patentansprüche

1. Verfahren zur Veränderung der Strukturladung von mineralischen Silikatverbindungen, wobei mindestens ein Lithiumsalz zugegeben wird, **dadurch gekennzeichnet, dass** die Mischung aus den Silikatverbindungen und dem mindestens einen Lithiumsalz homogenisiert und in Form eines Pulvers mit Mikrowelle beaufschlagt wird.

2. Verfahren gemäß Anspruch 1, **dadurch gekennzeichnet, dass** dioktaedrische Silikatverbindungen oder Zeolithe als mineralische Silikatverbindungen ausgewählt werden.

3. Verfahren gemäß Anspruch 2, **dadurch gekennzeichnet, dass** die mineralischen Silikatverbindungen Montmorillonit umfassen.

4. Verfahren gemäß einem der Ansprüche 1 bis 3, **dadurch gekennzeichnet, dass** die Mischung auf eine Temperatur zwischen 100 °C und 300 °C erwärmt wird.

5. Verfahren gemäß Anspruch 4, **dadurch gekennzeichnet, dass** die Mischung auf eine Temperatur zwischen 190 °C und 230 °C erwärmt wird.

6. Verfahren gemäß einem der Ansprüche 1 bis 5, **dadurch gekennzeichnet, dass** die Mischung zwischen 5 Minuten und 30 Minuten mit Mikrowelle beaufschlagt wird.

7. Verfahren gemäß Anspruch 6, **dadurch gekennzeichnet, dass** die Mischung zwischen 5 Minuten und 10 Minuten mit Mikrowelle beaufschlagt wird.

8. Verfahren gemäß einem der Ansprüche 1 bis 7, **dadurch gekennzeichnet, dass** die Mischung auf ein Substrat aufgebracht ist, das kontinuierlich durch einen Bereich geschoben wird, innerhalb dessen sie mit Mikrowelle beaufschlagt wird.

## Claims

1. Method for modifying the structural charge of mineral siliceous compounds, wherein at least one lithium salt is added, **characterised in that** the mixture of the siliceous compounds and the at least one lithium salt is homogenised and, in the form of a powder, subjected to microwaves.

2. Method according to claim 1, **characterised in that** dioctahedral siliceous compounds or zeolites are selected as the mineral siliceous compounds.

3. Method according to claim 2, **characterised in that** the mineral siliceous compounds contain montmorillonite.

4. Method according to one of claims 1 to 3, **characterised in that** the mixture is heated to a temperature between 100°C and 300°C.

5. Method according to claim 4, **characterised in that** the mixture is heated to a temperature between 190°C and 230°C.

6. Method according to one of claims 1 to 5, **characterised in that** the mixture is subjected to microwaves for between 5 minutes and 30 minutes.

7. Method according to claim 6, **characterised in that** the mixture is subjected to microwaves for between 5 minutes and 10 minutes.

8. Method according to one of claims 1 to 7, **characterised in that** the mixture is placed on a substrate which is continuously squeezed through an area within which it is subjected to microwaves.

## Revendications

1. Procédé pour modifier la charge de structure de composés de silicate minéraux, selon lequel au moins un sel de lithium est ajouté, **caractérisé en ce que** le mélange des composés de silicate et du ou des sel(s) de lithium est homogénéisé et traité par des micro-ondes de façon à être pulvérisé.

2. Procédé conforme à la revendication 1,
**caractérisé en ce que**
des composés de silicate dioctaédriques ou des zéolites sont choisis en tant que composés de silicate minéraux.

3. Procédé conforme à la revendication 2,
**caractérisé en ce que**
les composés de silicate minéraux renferment de la Montmorillonite.

4. Procédé conforme à l'une des revendications 1 à 3,
**caractérisé en ce que**
le mélange est chauffé à une température comprise entre 100°C et 300°C.

5. Procédé conforme à la revendication 4,
**caractérisé en ce que**
le mélange est chauffé à une température comprise entre 190°C et 230°C.

6. Procédé conforme à l'une des revendications 1 à 5,
**caractérisé en ce que**
le mélange est traité par des micro-ondes pendant 5 à 30 min.

7. Procédé conforme à la revendication 6,
**caractérisé en ce que**
le mélange est traité par des micro-ondes pendant 5 à 10 min.

8. Procédé conforme à l'une des revendications 1 à 7,
**caractérisé en ce que**
le mélange est appliqué sur un substrat qui est déplacé par translation en continu au travers d'une zone dans laquelle il est traité par des micro-ondes.
